(19) **Europäisches Patentamt**

**European Patent Office**

**Office européen des brevets**

(11) Veröffentlichungsnummer: **0 285 144 B1**

(12) **EUROPÄISCHE PATENTSCHRIFT**

(45) Veröffentlichungstag der Patentschrift: **06.11.91**

(21) Anmeldenummer: **88105202.1**

(22) Anmeldetag: **30.03.88**

(51) Int. Cl.⁵: **E01H 1/00**, B01D 17/025, E03F 7/10

(54) **Fahrbare Vorrichtung zum Absaugen von schädlichen Flüssigkeiten.**

(30) Priorität: **03.04.87 DE 8704968 U**

(43) Veröffentlichungstag der Anmeldung:
**05.10.88 Patentblatt 88/40**

(45) Bekanntmachung des Hinweises auf die
Patenterteilung:
**06.11.91 Patentblatt 91/45**

(84) Benannte Vertragsstaaten:
**AT BE CH DE ES FR GB GR IT LI LU NL SE**

(56) Entgegenhaltungen:
**EP-A- 0 017 192**
**DE-A- 2 758 038**
**DE-A- 3 313 635**
**FR-A- 2 536 739**
**US-A- 2 701 619**

(73) Patentinhaber: **Crema, Erhard**
**Goethestrasse 125 i**
**W-6457 Maintal(DE)**

(72) Erfinder: **Crema, Erhard**
**Goethestrasse 125 i**
**W-6457 Maintal(DE)**

(74) Vertreter: **Stoffregen, Hans-Herbert, Dr.**
**Dipl.-Phys. et al**
**Patentanwälte Strasse & Stoffregen Salz-**
**strasse 11a Postfach 2144**
**W-6450 Hanau/Main 1(DE)**

## Beschreibung

Die Erfindung bezieht sich auf eine fahrbare Vorrichtung zum Absaugen von schädlichen Flüssigkeiten, wie z.B. Öl-Wassergemische, mittels einer Unterdruckquelle wie in einem geschlossenen Wasserkreislauf betätigte Wasserstrahlpumpe, die in einer Wasservorlage angeordnet ist, wobei die Flüssigkeit zunächst in einen mit der Unterdruckquelle verbundenen Sammelbehälter und anschließend in einen Abscheider gelangt, der eine Ablaßöffnung aufweist.

Eine entsprechende z.B. auf einem selbstfahrenden Fahrzeug oder auf einem Anhänger angeordnete Vorrichtung setzt sich aus einer Absaugvorrichtung gemäß der DE-C-27 58 038 und einem Abscheider gemäß der EP-A-0 017 192 zusammen. Dabei zeigt insbesondere der Abscheider den Nachteil, daß das Ölwassergemisch über einen Winkel zueinander beschreibenden mit einem Vlies versehenen schräge Ebenen fließen muß, um die gewünschte Trennung zwischen Öl und Wasser vorzunehmen. Eine Verwendung für hochexplosive Stoffe ist nicht möglich, da der Abscheider im eigentlichen Sinne nicht zur Aufnahme und zum Transport von Flüssigkeiten geeignet ist. Eine Aufnahme von aggressiven Medien ist sogar ausgeschlossen.

Aufgabe der vorliegenden Erfindung ist es, eine Vorrichtung der eingangs genannten Art so auszubilden, daß insbesondere unter Verwendung der der DE-C-27 58 038 zu entnehmenden Absaugvorrichtung ein problemloses Absaugen von Chemikalien und explosionsgefährdeten Stoffen sowie eine Öl-Wasser-Trennung möglich ist, wobei gleichzeitig gewährleistet sein soll, daß die angesaugten Flüssigkeiten mit der Vorrichtung selbst transportiert werden können.

Die Aufgabe wird erfindungsgemäß dadurch gelöst, daß der Sammelbehälter auf dem als geschlossener druckfester Abscheiderbehälter ausgebildeten Abscheider angeordnet ist, daß innerhalb des Abscheiderbehälters eine im wesentlich vertikal verlaufende von den Abscheiderbehälterwandungen ausgehende Trennwandung verläuft, die zu dem Abscheiderbehälterboden beabstandet ist, daß von dem Sammelbehälter eine Leitung in den Abscheiderbehälter hineinführt, daß im Bodenbereich die Ablaßöffnung und daß in bezug auf die Trennwandung in dem die Leitung nicht aufweisenden Behälterabschnitt an einer Behälterwandung in der oberen Hälfte des Abscheiderbehälters ein Überlauf angeordnet ist.

Durch die erfindungsgemäß ausgebildete Vorrichtung ergibt sich eine überaus kompakte funktionstüchtige Vorrichtung zum Ansaugen und Transportieren sowie gegebenenfalls Trennen von Flüssigkeiten. Dabei kann der Transport selbst nach der Verordnung brennbarer Flüssigkeiten erfolgen, da sowohl der Sammelbehälter als auch der Abscheiderbehälter druckfest ausgebildet ist. Zusätzlich sind zur Verhinderung von Explosionen erforderliche sicherheitstechnische Einrichtungen wie Flammendurchschlags- und Explosionssicherungen vorgesehen. Die Vorrichtung selbst kann von Hand oder vollautomatisch gesteuert werden.

Vorzugsweise weist der Abscheiderbehälter eine Zylinderform auf mit an einer Stirnseite entfernbaren Deckel, von dessen Randbereich die Trennwand ausgeht. Hierdurch ist ein konstruktiv einfacher Aufbau gegeben, wobei durch die Anordnung der Trennwand am Deckel der gesamte Innenraum des Abscheiderbehälters zugänglich und damit problemlos gereinigt werden kann. Gleiches gilt bezüglich der Trennwand, die ohne Schwierigkeiten im Bereich der lichten Weite des Deckels eingeschweißt werden kann, wobei im Bodenbereich ein Freiraum für hindurchzutretendes Wasser vorhanden ist, das von auf der Flüssigkeit sich ansammelndem Öls zu dem Überlauf hin verdrängt werden kann. Hierzu ist es erforderlich, daß vor Aufnahme des Öl-Wasser-Gemisches in dem Abscheiderbehälter zumindest soviel Wasser aufgefüllt ist, daß der untere Rand der Trennwand bedeckt ist.

Nach einer Ausgestaltung ist in dem die Leitung aufweisenden Abscheiderbehälterabschnitt zumindest eine Steuersonde angeordnet, die im Bodenbereich oberhalb des unteren Randes der Trennwand vorliegt. Diese Steuersonde stellt fest, ob in diesem Bereich die Flüssigkeit aus Wasser besteht oder bereits Öl enthält, um ein weiteres Füllen des Abscheiderbehälters zu unterbrechen.

Ferner kann vorgesehen sein, daß an der Oberseite des Abscheiderbehälters ein die Flüssigkeitsaufnahme regelndes kipp- und auslaufgesichertes Endlüftungsventil mit vorzugsweise nachgeordneter Flammendurchschlagssicherung angeordnet ist. Das Belüftungsventil wird dann geschlossen, wenn ein z.B. durch eine weitere Steuersonde detektierter maximaler Füllstand in dem Abscheiderbehälter erreicht ist, so daß ein weiteres Befüllen aufgrund des sich ausbildenden Drucks in dem Abscheiderbehälter nicht möglich ist.

Von dem Sammelbehälter selbst geht vorzugsweise eine Belüftungsleitung aus, in der ein kipp- und auslaufgesichertes vorzugsweise pneumatisch betätigtes Steuerventil angeordnet ist, dessen Ende mit einer Flammendurchschlagssicherung versehen ist. Das Ventil wird dann betätigt, wenn der Sammelbehälter entleert und der Inhalt in den Abscheiderbehälter gelangt, ohne daß die Gefahr einer Explosion besteht.

Eine weiter Sicherung der erfindungsgemäßen Vorrichtung beim Entleeren des Sammelbehälters in den Abscheiderbehälter ergibt sich dadurch, daß in der von dem Sammelbehälter kommenden und in den Abscheiderbehälter geführten Leitung ein kipp- und auslaufgesichertes vorzugsweise pneumatisch betätigtes Ventil angeordnet ist.

Erfindungsgemäß wird die Vorrichtung vorzugsweise mit einer Wasserstrahlpumpe betrieben, die in einem quaderförmig ausgebildeten wasserdichten Gehäuse angeordnet ist, dessen Breite parallel zu der den Überlauf nicht aufweisenden Stirnseite des Abscheiderbehälters verläuft. Hierdurch ergibt sich eine überaus raumsparende Anordnung der einzelnen Elemente.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines in der Zeichnung dargestellten Ausführungsbeispiels.

Es zeigen:

Fig. 1    einen Ausschnitt eines eine erfindungsgemäße Vorrichtung aufweisenden Fahrzeuges von rechts,

Fig. 2    das Fahrzeug gemäß Fig. 1 von der Rückseite her,

Fig. 3    die linke Seite des Fahrzeuges gemäß Fig. 1 und

Fig. 4    in Draufsicht das Fahrzeug nach Fig. 1.

In den Fig. ist im Ausschnitt ein selbstfahrendes Kraftfahrzeug dargestellt, das eine erfindungsgemäße Vorrichtung zum Absaugen und Ansammeln von insbesondere schädlichen Flüssigkeiten wie z.B. Öl-Wasser-Gemische bestimmt ist. Als wesentlicher Bestandteil ist ein Abscheiderbehälter (A), ein über diesem angeordneter Sammelbehälter (B) sowie eine in einem Gehäuse (C) angeordnete Vakuumquelle anzusehen, die in nachstehend beschriebener Art miteinander verbunden und ausgebildet sind. Ferner erkennt man eine Haspel (E), auf dem ein Saugschlauch aufgewickelt ist, über den die abzusaugenden Flüssigkeiten angesaugt werden. Hierzu mündet der Schlauch in eine Saugleitung (3), die ihrerseits über ein vorzugsweise kipp- und auslaufgesichertes Steuerventil, das pneumatisch betätigt werden kann, in den Sammelbehälter (B) mündet.

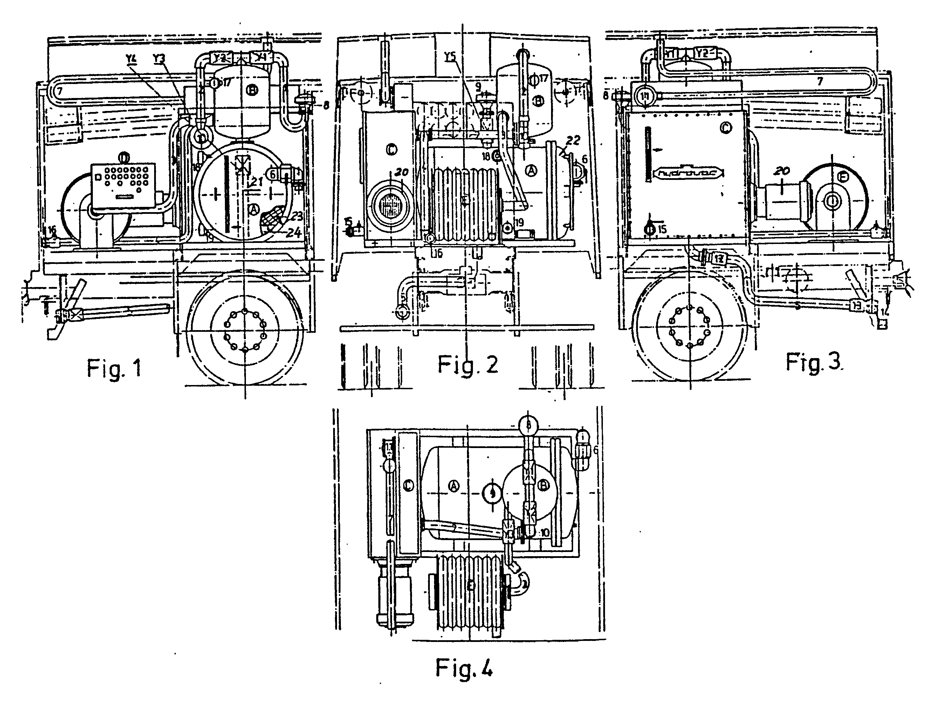

Der Sammelbehälter (B) weist in seinem Kopfbereich einen Anschlußstutzen auf, von dem zum einen eine Belüftungsleitung (1) mit am freien Ende angeordnete Flammendurchschlagssicherung (8) und eine Vakuumleitung (2) ausgeht, die an der Saugseite der in dem quaderförmig ausgebildeten Gehäuse (C) in einer nicht dargestellten Wasservorlage angeordneten Wasserstrahlpumpe mündet, die ihrerseits von der in Fig. 3 in Seitenansicht dargestellten Kreiselpumpe (20) von Treibwasser durchströmt wird. Hinter dem Ansaugstutzen ist in den Leitungen (1) und (2) jeweils ein vorzugsweise ebenfalls kipp- und auslaufgesichertes pneumatisch betätigtes Steuerventil (Y1) und (Y2) angeordnet. Ferner ist in der Vakuumleitung (2) eine Explosions- und Dauerbrandsicherung (10) angeordnet.

Von dem Gehäuse (C) geht eine Sicherheitsentlüftungsleitung (7) aus, in der ebenfalls eine Explosions- und Dauerbrandsicherung (11) integriert ist.

Der druckfeste Sammelbehälter (B) mündet über eine Leitung (21) in dem Abscheiderbehälter (A), wobei ein den Sammelbehälter freigebendes kipp- und auslaufgesichertes vorzugsweise pneumatisch betätigtes Steuerventil (Y4) innerhalb des Abscheiderbehälters (A) selbst angeordnet ist.

Der zylinderförmig ausgebildete druckfeste Abscheiderbehälter (A) weist auf der dem Gehäuse (C) gegenüberliegenden Stirnseite einen entfernbaren Deckel (22) auf, in dessen oberem Teil ein vorzugsweise für Wasser bestimmter verschließbarer Überlauf (6) eingelassen ist. Ferner erkennt man aus der teilweise weggebrochenen Darstellung nach Fig. 1, daß innerhalb des Abscheiderbehälters (A) eine Trennwandung (23) verläuft, die zu dem Boden des Abscheiderbehälters (A) beabstandet ist, ansonsten jedoch von der Innenwandung, und zwar von dem Deckel (22) ausgeht. Hierdurch bedingt wird beim Entfernen des Deckels (22) die Trennwand (23) mit entfernt, so daß das Innere des Abscheiderbehälters (A) frei zugänglich ist.

Zu den weiteren Elementen der erfindungsgemäßen Vorrichtung gehören Steuersonden (17), (18) und (19), wobei die Steuersonde (17) zur Feststellung des maximalen Füllstandes in dem Sammelbehälter (B) und die Steuersonde (18) zur Bestimmung des maximalen Füllstandes in dem Abscheiderbehälter (A) dient. Die Steuersonde (19) ist im unteren Bereich des Abscheiderbehälters (A) angeordnet, und zwar in einer Höhe über dem Boden, der oberhalb des freien Randes (24) der Trennwand (23) verläuft. Hierdurch ist sichergestellt, daß die Steuersonde (19) geeignet ist zu detektieren, welche Art von Flüssigkeit im Bereich oberhalb des unteren Randes (24) der Trennwand (23) in dem Abscheiderbehälter (8) vorliegt. Dabei befindet sich die Steuersonde in bezug auf die Trennwand (23) auf der zu dem Überlauf (6) gegenüberliegenden Seite, also in dem Abscheiderbehälterabschnitt, in dem die Leitung (21) mündet.

Das Gehäuse (C) weist im unteren Bereich ein Füll- und Ablaßventil (15) auf, um die für die nicht dargestellte Wasserstrahlpumpe erforderliche Wasservorlage aufzufüllen oder abzulassen.

Vom Bodenbereich des Abscheiderbehälters (A) geht eine Ablaßleitung (5) aus, in der Absperrventile (12) und (13) angeordnet sind. Das freie Ende der Ablaßleitung (5) ist durch eine Verschlußkappe (14) verschließbar.

Auch kann über eine Leitung (4) mit Absperrorgan (16) das von der Wasserstrahlpumpe erzeugte Vakuum an einen externen Behälter angeschlossen werden, um ein Ansaugen zu ermöglichen, wie es z.B. der DE-C-27 58 038 zu entnehmen ist.

Sowohl das Gehäuse (C) als auch der auch als Selbstentleerungsbehälter zu bezeichnende Sammelbehälter (B) und der Transport- und Ölabscheiderbehälter (A) sind auf einem gemeinsamen Rahmen montiert, wodurch eine transportierbare Einheit zur Verfügung gestellt wird, die problemlos z.B. auf einem Anhänger oder auf der Ladefläche eines selbstfahrenden Fahrzeuges angeordnet werden kann. Die Steuerung selbst kann über den Schaltkasten (D) vorgenommen werden.

Zu den einzelnen Elementen und deren Zusammenwirken ist folgendes auszuführen:
Die in dem Gehäuse (C) angeordnete Wasserstrahlpumpe ist überaus wartungsfrei und zeigt eine Vakuumleistung bis ca. 20 mbar. Erwähntermaßen erfolgt der Antrieb über die Kreiselpumpe (20), wobei das Treibwasser im Kreislauf gefahren wird, so daß von einem Wasserverlust nicht gesprochen werden kann. Die Füllung des Gehäuses (C) zur Erzielung der erforderlichen Wasservorlage erfolgt über das Füll- und Ablaßventil (15).

Der Abscheiderbehälter (A) ist sowohl als Ölabscheider als auch Transportbehälter für Chemikalien ausgelegt. Sofern ein Öl-Wasser-Gemisch angesaugt wird, ist zunächst Wasser bis zum Rand (24) der Trennwand (23) in den Abscheiderbehälter (A) zu füllen. Sodann wird der Unterdruck von der Wasserstrahlpumpe aufgebaut, um das Öl-Wasser-Gemisch in dem dem Abscheiderbehälter (A) vorgeschalteten Sammelbehälter (B) aufzunehemen. Der Behälter (B) ist von der Sonde (17) gesteuert und läßt das angesaugte Gemisch bei Erreichen des maximalen Füllstandes in den darunterliegenden Abscheiderbehälter (A) ab. In diesem Fall ist der Sammelbehälter (B) über das Ventil (Y1) geöffnet und wird mit der Umgebungsluft verbunden. Der Überlauf (6) ist gleichzeitig geöffnet, um daß durch die Trennwand von Öl gereinigte Wasser kontinuierlich überlaufen zu lassen. Sobald die Steuersonde (19) anzeigt, daß sich im Bodenbereich nicht mehr reines Wasser befindet, wird die Anlage automatisch abgestellt. Sodann sind die Ventile (12) und (13) zu öffnen und über die Leitung (5) das Öl abzulassen.

Der Abscheiderbehälter (A) ist auch zur Aufnahme und den Transport von Chemikalien geeignet. Dabei erfolgt das Befüllen entsprechend der zuvor beschriebenen Art. Alternativ kann ein Befüllen über die Leitung (5) bzw. den Überlauf (6), also in umgekehrter Richtung erfolgen.

Die gesamte Vorrichtung ist aus Sicherheitsgründen explosionssicher ausgelegt, so daß sowohl der Sammelbehälter (B) als auch der Abscheiderbehälter (A) einem Druck von 10 bar standhalten. Zur Verhinderung von Zündungen der eventuell in den Behältern befindlichen zündfähigen Medien ist in der Entlüftung (7) des Gehäuses (C) eine Explosions- und Dauerbrandsicherung (11) angeordnet. Auch zwischen der Wasserstrahlpumpe und dem Sammelbehälter (B) ist eine Dauerbrandsicherung (10) eingebaut, um zu verhindern, daß eine gegenseitige Zündung erfolgt.

Der Sammelbehälter (B) besitzt an der Belüftungsseite (8) und der Abscheiderbehälter (A) an seiner Be- und Entlüftung (9) je eine Flammendurchschlagssicherung.

Erwähntermaßen kann die erfindungsgemäße Vorrichtung nicht nur über die eingebaute Wasserstrahlpumpe, sondern auch extern betrieben werden. Dies bedeutet, daß die Vorrichtung als reines Vakuumsystem betrieben wird.

## Patentansprüche

1. Fahrbare Vorrichtung zum Absaugen von schädlichen Flüssigkeiten wie z.B. Öl-Wasser-Gemische mittels einer Unterdruckquelle wie in einem geschlossenen Wasserkreislauf betätigte Wasserstrahlpumpe, die in einer Wasservorlage angeordnet ist, wobei die Flüssigkeit zunächst in einen mit der Unterdruckquelle verbundenen Sammelbehälter (B) und anschließend in einen Abscheider (A) gelangt, der eine Ablaßöffnung aufweist,
**dadurch gekennzeichnet,**
daß der Sammelbehälter (B) auf dem als geschlossener druckfester Abscheiderbehälter (A) ausgebildeten Abscheider angeordnet ist, daß innerhalb des Abscheiderbehälters eine im wesentlich vertikal verlaufende von den Abscheiderbehälterwandungen ausgehende Trennwand (23) verläuft, die zu dem Abscheiderbehälterboden beabstandet ist, daß von dem Sammelbehälter eine Leitung (21) in den Abscheiderbehälter hineinführt, daß im Bodenbereich die Ablaßöffnung und daß in bezug auf die Trennwandung in dem die Leitung nicht aufweisenden Behälterabschnitt an einer Behälterwandung in der oberen Hälfte des Abscheiderbehälters eine Überlauföffnung angeordnet ist.

2. Vorrichtung nach Anspruch 1,
**dadurch gekennzeichnet,**
daß der Abscheiderbehälter (A) Zylinderform aufweist und eine Stirnseite als entfernbarer Deckel (22) ausgebildet ist, von dessen Randbereich die Trennwand (23) ausgeht.

3. Vorrichtung nach Anspruch 1,
**dadurch gekennzeichnet,**

daß in dem die Leitung (21) aufweisenden Abscheiderbehälterabschnitt zumindest eine Steuersonde (19) angeordnet ist, die im Bodenbereich oberhalb des unteren Randes (24) der Trennwand (23) angeordnet ist.

4. Vorrichtung nach Anspruch 1,
**dadurch gekennzeichnet,**
daß an der Oberseite des Abscheiderbehälters (A) ein die Flüssigkeitsaufnahme regelndes kipp- und auslaufgesichertes Entlüftungsventil (Y5) mit vorzugsweise nachgeordneter Flammendurchschlagsicherung (9) angeordnet ist.

5. Vorrichtung nach Anspruch 1,
**dadurch gekennzeichnet,**
daß von dem Sammelbehälter (B) eine Belüftungsleitung (1) ausgeht, in der ein kipp- und auslaufgesichertes vorzugsweise pneumatisch betätigtes Steuerventil (Y1) angeordnet ist, dessen Ende mit einer Flammendurchschlagsicherung (8) versehen ist.

6. Vorrichtung nach Anspruch 1,
**dadurch gekennzeichnet,**
daß in der von der Unterdruckquelle (C) zu dem Sammelbehälter (B) führenden Leitung (2) unmittelbar vor diesem ein kipp- und auslaufgesichertes vorzugsweise pneumatisch betätigtes Ventil (Y2) angeordnet ist.

7. Vorrichtung nach Anspruch 6,
**dadurch gekennzeichnet,**
daß in der von der Unterdruckquelle (C) zu dem Sammelbehälter (B) führenden Leitung (2) eine Dauerbrandsicherung (10) angeordnet ist.

8. Vorrichtung nach Anspruch 1,
**dadurch gekennzeichnet,**
daß in der von dem Sammelbehälter (B) kommenden und in dem Abscheiderbehälter (A) geführten Leitung (21) ein kipp- und auslaufgesichertes vorzugsweise pneumatisch betätigtes Ventil (Y4) angeordnet ist.

9. Vorrichtung nach Anspruch 1,
**dadurch gekennzeichnet,**
daß die Unterdruckquelle in Form der Wasserstrahlpumpe in einem quaderförmig ausgebildeten wasserdichten Gehäuse (C) angeordnet ist, dessen Breitseite parallel zu der den Überlauf (6) nicht aufweisenden Stirnseite des Abscheiderbehälters (A) verläuft.

10. Vorrichtung nach Anspruch 9,
**dadurch gekennzeichnet,**
daß das die Wasservorlage aufweisende Gehäuse (C) eine Sicherheitsentlüftung (7) aufweist, in der eine Dauerbrandsicherung (11) angeordnet ist.

11. Vorrichtung nach Anspruch 3,
**dadurch gekennzeichnet,**
daß im Deckelbereich des die Leitung (21) aufweisenden Abscheiderbehälterabschnittseine zweite Steuersonde (18) angeordnet ist.

12. Vorrichtung nach Anspruch 1,
**dadurch gekennzeichnet,**
daß in dem Sammelbehälter (B) eine dessen Entleerung auslösende Steuersonde (17) angeordnet ist.

**Claims**

1. A mobile device for extracting harmful liquids, for example oil/water mixtures, by means of a vacuum source such as a water jet pump operated in a closed water circuit and disposed in a hydraulic seal, said liquid passing initially into a collecting vessel (B) connected to said vacuum source and then into a separator (A) having a drain opening,
**wherein**
said collecting vessel (B) is disposed on the separator designed as a closed, compression-proof separator vessel (A), wherein a partition wall (23) extending substantially vertically from the separator vessel walls is provided inside said separator vessel and is at a distance from the bottom of said separator vessel, wherein a pipe (21) from said collecting vessel passes into said separator vessel, wherein said drain opening is disposed in the bottom area and wherein an overflow opening is disposed on a vessel wall in the upper half of said separator vessel in that section of the vessel in relation to said partition wall that does not contain said pipe.

2. A device according to Claim 1,
**wherein**
said separator vessel (A) is of cylindrical shape and has one face designed as a removable cover (22) from whose edge said partition wall (23) extends.

3. A device according to Claim 1,
**wherein**
at least one control sensor (19) is disposed in that section of said separator vessel containing said pipe (21) and is disposed in the bottom area above the lower edge (24) of said partition wall (23).

4. A device according to Claim 1, **wherein** a bleeder valve (Y5) secured against tilting and leakage and regulating the liquid intake, with flashback prevention means (9) preferably downstream, is disposed on the upper side of the separator vessel (A).

5. A device according to Claim 1, **wherein** a ventilation pipe (1) extends from said collecting vessel (B), in which pipe is disposed a control valve (Y1) secured against tilting and leakage and preferably pneumatically operated, the end of said valve being provided with a flashback prevention means (8).

6. A device according to Claim 1, **wherein** a control valve (Y2) secured against tilting and leakage and preferably pneumatically operated is disposed immediately in front of said collecting vessel (B) in the pipe (2) leading from said vacuum source (C) to said collecting vessel.

7. A device according to Claim 6, **wherein** a continuous combustion prevention means (10) is disposed in said pipe (2) leading from said vacuum source (C) to said collecting vessel (B).

8. A device according to Claim 1, **wherein** a valve (Y4) secured against tilting and leakage and preferably pneumatically operated is disposed in said pipe (21) coming from said collecting vessel (B) and leading to said separator vessel (A).

9. A device according to Claim 1, **wherein** said vacuum source is disposed in the form of a water jet pump in a block-shaped waterproof housing (C) whose broad side is parallel to that face of said separator vessel not provided with said overflow opening (6).

10. A device according to Claim 9, **wherein** said housing (C) containing the hydraulic seal has a safety bleed pipe (7) in which a continuous combustion prevention means is disposed.

11. A device according to Claim 3, **wherein** a second control sensor (18) is disposed in the cover area of that separator vessel section containing said pipe (21).

12. A device according to Claim 1, **wherein** a control sensor (17) is disposed in said collecting vessel (B) to trigger the emptying thereof.

**Revendications**

1. Dispositif mobile pour aspirer des liquides nuisibles, tels que mélanges huile-eau, moyennant une source à dépression, p.ex. une trompe soufflante actionnée par un circuit d'eau fermé disposée dans un barboteur à eau, le liquide parvenant d'abord dans un récipient collecteur (B) et ensuite dans un séparateur (A) pourvu d'un orifice d'échappement, **caractérisé en ce que,** le récipient collecteur (B) est disposé sur le séparateur, conçu comme récipient de séparation (A) fermé et résistant à la pression, qu'à l'intérieur du récipient de séparation passe une paroi de séparation (23) essentiellement verticale et partant des parois du récipient de séparation avec un écart par rapport au fond du récipient de séparation, qu'une conduite (21) mène à partir du récipient collecteur dans le récipient de séparation, que l'orifice d'échappement est disposé dans le fond et qu'un orifice de trop-plein est disposé sur une paroi de la moitié supérieure du récipient de séparation et ce concernant la paroi de séparation dans la partie du récipient ne disposant pas de conduite.

2. Dispositif selon la revendication 1, **caractérisé en ce que,** le récipient de séparation (A) est de forme cylindrique et qu'une face frontale est conçue comme couvercle démontable (22), la paroi de séparation (23) partant du bord de ce dernier.

3. Dispositif selon la revendication 1, **caractérisé en ce que,** dans la partie du récipient de séparation dans laquelle se trouve la conduite (21), est disposée au moins une sonde de commande (19), logée dans la zone du fond au-dessus du bord inférieur (24) de la paroi de séparation (23).

4. Dispositif selon la revendication 1, **caractérisé en ce que,** sur la face supérieure du récipient de séparation (A) est disposée une soupape d'évacuation (Y5), stabilisé au déversement et à l'écoulement, réglant l'arrivée du liquide, avec une sécurité pare-flamme (9) montée de préférence en aval.

5. Dispositif selon la revendication 1,
   **caractérisé en ce que,**
   une conduite d'aération (1) part du récipient collecteur (B) dans laquelle est disposée une vanne-pilote, stabilisée au déversement et à l'écoulement (Y1), de préférence à commande pneumatique, l'extrémité de laquelle étant muni d'une sécurité pare-flamme (8).

6. Dispositif selon la revendication 1,
   **caractérisé en ce que,**
   une soupape (Y2), stabilisée au déversement et à l'écoulement, de préférence à commande pneumatique, est disposée dans la conduite (2) menant de la source à dépression (C) vers le récipient collecteur (B) et directement devant ce dernier.

7. Dispositif selon la revendication 6,
   **caractérisé en ce que,**
   une sécurité permanente pare-feu (10) est disposée dans la conduite (2) menant de la source à dépression (C) vers le récipient collecteur (B).

8. Dispositif selon la revendication 1,
   **caractérisé en ce que,**
   une soupape (Y4), stabilisé au déversement et à l'écoulement, de préférence à commande pneumatique, est disposée dans la conduite (21) venant du récipient collecteur (B) et menant dans le récipient de séparation (A).

9. Dispositif selon la revendication 1,
   **caractérisé en ce que,**
   la source à dépression sous forme d'une trompe soufflante est disposée dans un carter (C) parallélipipédique, dont le côté large est parallèle à la face frontale du récipient de séparation (A) ne contenant pas le trop-plein (6).

10. Dispositif selon la revendication 9,
    **caractérisé en ce que,**
    le boîtier (C) avec le barboteur à eau présente une ventilation de sécurité (7) dans laquelle est logée une sécurité pare-feu permanente (11).

11. Dispositif selon la revendication 3,
    **caractérisé en ce que,**
    une deuxième sonde de commande (18) est logée dans la zone du couvercle de la partie du récipient collecteur contenant la conduite (21).

12. Dispositif selon la revendication 1,
    **caractérisé en ce que,**

une sonde de commande (17) est disposée dans le récipient collecteur (B) déclenchant le vidage de ce dernier.

Fig. 1

Fig. 2

Fig. 3

Fig. 4

EP 0 285 144 B1